# EUROPEAN PATENT SPECIFICATION

(11) **EP 1 953 472 B1**
(45) Date of publication and mention of the grant of the patent: **27.07.2016**
(21) Application number: 08150122.3
(22) Date of filing: 09.01.2008
(51) Int. Cl.: F24F 11/00

(54) **Integrated management system and method using setting information back-up for controlling multi-type air conditioners**
Integriertes Verwaltungssystem und -verfahren unter Verwendung von Einstellungsdaten-Backups zur Steuerung von Mehrsystem-Klimaanlagen
Système de gestion intégrée et procédé utilisant la sauvegarde des informations de réglage pour contrôler les climatiseurs d'air à fonctions multiples

(30) Priority: 02.02.2007 KR 20070011211
(43) Date of publication of application: 06.08.2008
(73) Proprietor: LG Electronics Inc., Seoul 150-721 (KR)
(72) Inventor: Kim, Jun-Tae, Seoul (KR); Youn, Sang-Chul, Seoul (KR); Jeon, Duck-Gu, Seoul (KR)
(74) Representative: Vossius & Partner Patentanwälte Rechtsanwälte mbB

(56) References cited:
- US-A- 4 674 291
- US-A1- 2005 040 247
- US-A1- 2005 043 924
- US-A1- 2006 065 750

## Description

The present invention relates to an integrated management system and method for controlling multi-type air conditioners, and more particularly, to an integrated management system and method for controlling multi-type air conditioners capable of stably controlling an operation of at least one air conditioner group by backing up setting information used as criteria for controlling the operation of the at least one air conditioner group.

Air conditioner systems are now used in most buildings and homes. For example, one type of air conditioner system includes indoor units disposed in each room of a home or in each office in a building, and an outdoor unit shared by and connected to the indoor units.

An air conditioner group denotes a grouping of a plurality of air conditioners, and an air conditioner system denotes a system for managing at least one air conditioner group.

The air conditioner system may include a local controller which detects various operation states of the plurality of air conditioner groups and controls the plurality of air conditioner groups via a gateway according to the detection.

An integrated management system for controlling the multi-type air conditioners is being developed to integrally manage at least one air conditioner system from a remote location.

The integrated management system for controlling the multi-type air conditioners may collect operation state information related to the air conditioner system having the multi-type air conditioners and setting information related to the local controller for the multi-type air conditioners, so as to store and manage such information in a database. Thus, when the air conditioner system is not working properly, the integrated management system can automatically detect the malfunction or error and rapidly repair it.

Here, the local controller may include setting information related to indoor units and outdoor units and various types of setting information (e.g., scheduling information, malfunction history data, user information, etc.). Such setting information are considered to be very important and should be protected.

In the operation of the related art integrated management system for controlling the multi-type air conditioners, the setting information can be protected as a user directly backs up (or stores) the setting information in a storage unit, or the setting information is automatically backed up (or stored) in a storage unit of a local controller in a periodic manner using a backup software program.

Such setting information may be backed up automatically. However, when an error occurs in the setting information, the error in the setting information should be manually repaired by the user.

Furthermore, when changes do not occur in the setting information, the operation of backing up the setting information in the storage unit of the local controller undesirably increases the processing load of the local controller.

US 2005/043924 A1 discloses a service system for air conditioners including a monitoring center which has a customer database, an operation information database for storing operation information of air conditioners for each customer, and a device information database having service information on the air conditioners related with each customer of the customer database. Further, the system comprises a data transfer device that holds data from the air conditioners and sends to the air conditioners control signals for on/off operation, temperature setting, air flow control, and operation schedule and management. The data transfer device is connected to a processing device which performs a bidirectional communication with the data transfer device to monitor and control the operation condition of the air conditioners. When a failure, an anomaly or a symptom of anomaly occurs in the air conditioner, the operation information of the air conditioner is transmitted to the sending/receiving server where it is held.

The present inventors recognized at least the above described problems of the related art. Based upon such recognition, it is an object of the present invention to provide an integrated management system and method for controlling multi-type air conditioners capable of stably backing up setting information related to a local controller of at least one air conditioner system which is disposed in a particular area (e.g., room or office) and is being operated, and then remotely controlling the backup setting information for restoration when an error occurs in the setting information.

To achieve, according to the present invention, there is provided an integrated management system for controlling multi-type air conditioners according to claim 1.

In another aspect of the present invention, there is provided an integrated management system for controlling multi-type air conditioners according to claim 6.

The remote integrated management system comprises: a remote data-for-backup collecting module configured to receive the setting information data for back-up based on the remote communication protocol from the at least one air conditioner system; a database server configured to classify the received setting information data for backup for each air conditioner group and store the classified data; and a remote data-for-restoration transmitting module configured to convert the setting information data for back-up stored in the database server into setting information data for restoration based on the remote communication protocol for transmission.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
Figure 1 is a block diagram illustrating an integrated management system for controlling multi-type air conditioners in accordance with one embodiment of the present invention; and
Figure 2 is a flowchart illustrating an operation of an integrated management system for controlling multi-type air conditioners in accordance with the present invention.

Reference will now be made in detail to some embodiments of the present invention, examples of which are illustrated in the accompanying drawings.

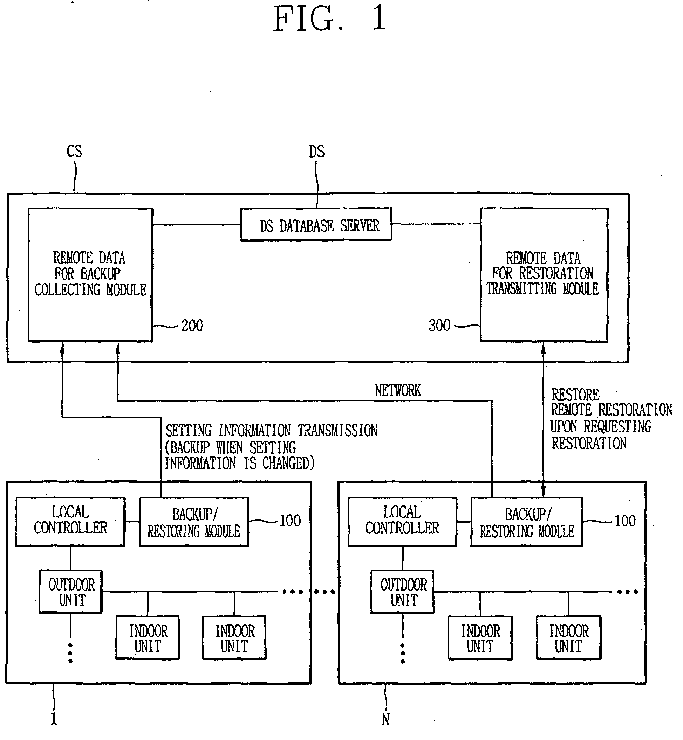

Figure 1 is a block diagram illustrating an integrated management system for controlling multi-type air conditioners in accordance with one embodiment of the present invention.

As illustrated in Figure 1, an integrated management system may comprise a plurality of air conditioner systems (1 to N), and a remote integrated management system (CS).

Each air conditioner system (1 to N) detects changes in each setting information related to one or more air conditioner groups, and converts the detected setting information into setting information data according to a remote communication protocol, to thusly transmit the converted setting information data.

Here, the air conditioner group denotes an air conditioner installation arrangement including a plurality of air conditioners capable of satisfying the cooling requirements of a building, whereby at least one indoor unit is connected to one outdoor unit. It is possible not only to separately control each air conditioner using an indoor unit disposed in each room or location, but also, to integrally control every air conditioner in a building at a certain location by means of a local controller (or some other type of control entity).

Here, the air conditioner systems (1 to N) according to the present invention may include a backup/restoring module (100) (or some other type of entity or entities that perform data back-up and/or restoring functions) configured to detect any changes in the setting information, such that when it is found that the setting information is changed, the backup/restoring module (100) converts the changed setting information into setting information data for back-up according to a remote communication protocol, to thusly transmit the data.

The remote integrated management system (CS) then receives and stores the setting information data for back-up based on the remote communication protocol from the one or more air conditioner systems (1 to N). When receiving a restoration request, the remote integrated management system (CS) converts the stored setting information data for back-up according to the remote communication protocol for transmission.

The remote integrated management system (CS) may include a remote data-for-backup collecting module (200) (or some other type of entity that collects certain data for storage) configured to receive the setting information data for back-up based on the remote communication protocol from the one or more air conditioner systems (1 to N), a database server (DS) (or some other type of network entity) configured to classify and store the received setting information data for back-up for each air conditioner group, and a remote data-for-restoration transmitting module (300) (or some other type of entity that transmits certain data for restoration) configured to convert the setting information data stored in the database server (DS) into setting information data for restoration based on the remote communication protocol when restoration is requested.

Also, the remote integrated management system (CS) may further include a monitoring server (not shown) (or some other type of network entity) configured to display operation state information on the air conditioner systems (1 to N) that a service manager (or operator) wants to know.

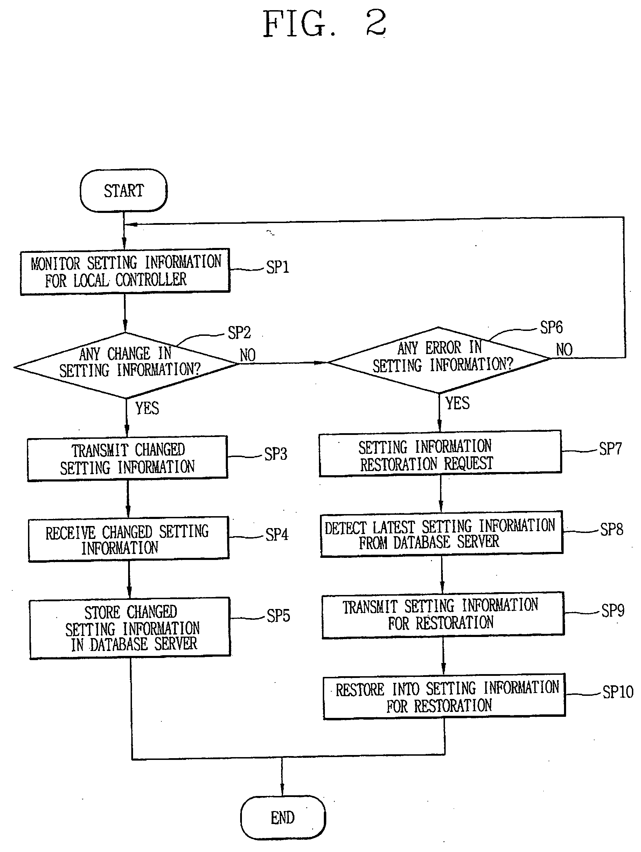

An exemplary operation of the remote management system for controlling the multi-type air conditioners according to the present invention having such configuration will now be described with reference to Figure 2.

First, according to the present invention, the backup/restoring module (100) is pre-set to perform back up (or storing) of setting information that has changed or to request a restoration procedure for correcting an error occurred in the setting information when the change or error is detected in the setting information while monitoring changes or errors in the setting information for the local controller.

Here, the local controller of the air conditioner systems (1 to N) controls and monitors multi-type air conditioners connected thereto using various types of setting information.

For example, the local controller recognizes, based on the setting information, schedule information required for performing schedule control, power usage information for performing power control, malfunction history information with respect to any malfunctions that occurred, user information and the like, as well as the names, positions (locations), model type and connection information all related to the indoor units and the outdoor unit. The local controller then controls the multi-type air conditioners connected thereto based upon the recognized results.

Here, the present invention will be described in an example of cooperation between one air conditioner system (1 to N) and the remote integrated management system (CS).

First, the backup/restoring module (100) of the air conditioner system (1 to N) monitors any changes in the setting information related to the local controller (SP1).

While monitoring the setting information related to the local controller, if any change occurs in the setting information (SP2), the backup/restoring module (100) sends the changed setting information to the remote data-for-backup collecting module (200) of the remote integrated management system CS (SP3).

Accordingly, the remote data-for-backup collecting module (200) receives the changed setting information from the backup/restoring module (100) (SP4), and then stores the received changed setting information in the database server (DS) (SP5).

Also, the backup/restoring module (100) monitors the change in the setting information related to the local controller, and simultaneously determines whether any error occur in the setting information (SP6).

According to the determination, if an error has occurred in the setting information related to the local controller, the backup/restoring module (100) sends a setting information restoration request signal to the remote data-for-restoration transmitting module (300) of the remote integrated management system (CS) (SP7).

Thereafter, the remote data-for-restoration transmitting module (300) of the remote integrated management system (CS) detects the latest (i.e., most recent) setting information from the database server (DS) (SP8), and sends the detected latest setting information to the backup/restoring module (100) of the air conditioner system (1 to N) (SP9).

The backup/restoring module (100) of the air conditioner system (1 to N) accordingly restores the setting information related to the local controller into the latest setting information received from the remote data-for-restoration transmitting module (300) of the remote integrated management system (CS) (SP10).

That is, in the present invention, while the backup/restoring module of the local controller disposed in the air conditioner system monitors whether changes or errors occur in the setting information on the multi-type air conditioners, if any change occurs in the setting information, the backup/restoring module sends the changed setting information to the remote integrated management system. The remote integrated management system then backs up (or stores) and manages the setting information. If any error is detected in the setting information, the backup/restoring module restores the setting information for the local controller in the air conditioner system using the setting information backed up in the remote integrated management system.

The integrated management system of the present invention can be applied to a system having multi-type air conditioners, to a single air conditioner, and to components included in each air conditioner.

In other words, the embodiments of the present invention have been described in detail with reference to the drawings; however, they should not be construed as limiting the scope of the present invention. Also, it can be understood by those skilled in the art that many variations can be implemented within the scope as defined in the appended claims.

As described above, the integrated management system for controlling multi-type air conditioners according to the present invention can use the remote integrated management system to securely and automatically back up (or store) setting information related to a local controller disposed in at least one air conditioner system, which is installed at a certain location (i.e., in a room/office) and is being operated, thereby allowing an improvement of stability of the integrated management system.

Also, by using the integrated management system for controlling multi-type air conditioners according to the present invention, when an error occurs in the setting information for the local controller disposed in the air conditioner system, various errors can rapidly be restored (or fixed) by an automated restoring function, thereby allowing an improvement of stability of the integrated management system.

The features described herein are related to an integrated management system (CS) for controlling multi-type air conditioners, the system comprising: a data collecting unit (200) to communicate with at least one multiple air conditioning system (1 to N) in order to collect data related to any changes or updates in operation setting information; a data transmitting unit (300) to communicate with the at least one multiple air conditioning system (1 to N) in order to transmit data related to data back-up or data restoration; and a storage medium (DS) connected with the data collecting unit (200) and the data transmitting unit (300), whereby changed or updated operation setting information is stored in the storage medium (DS) to be used for data back-up or data restoration.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. An integrated management system (CS) for controlling multi-type air conditioners, comprising:
at least one air conditioner system (1 to N) including at least one air conditioner group provided with a local controller connected to multi-type air conditioners of the at least one air conditioner group via a gateway, **characterized in that** the system comprises:
a backup/restoring module (100) configured to monitor changes in setting information related to the at least one air conditioner group, convert the setting information based on the monitored changes into setting information data according to a remote communication protocol so as to transmit the setting information data, and restore the setting information related to the local controller into the latest setting information when an error occurs in the setting information.

2. The system of claim 1, wherein when the setting information is changed, the backup/restoring module (100) converts the changed setting information into setting information data for back-up according to the remote communication protocol for transmission.

3. The system of claim 2, further comprising:
a remote data-for-restoration transmitting module (300),
wherein the backup/restoring module (100) transmits a request signal to the remote data-for-restoration transmitting module (300) for restoring the setting information when the error occurs in the setting information, and restores the setting information related to the local controller into setting information received from the remote data-for-restoration transmitting module (300) for back-up as a response signal with respect to the request signal.

4. A system for controlling multi-type air conditioners, the system comprising:
a remote integrated management system (CS) configured to receive setting information data from at least one air conditioner system (1 to N) and to store the setting information data for back-up, based on a remote communication protocol, and to convert and transmit the latest setting information data for back-up according to the remote communication protocol when a restoration is requested.

5. The system of claim 4, wherein the remote integrated management system (CS) comprises:
a data collecting module (200) configured to receive the setting information data for back-up based on the remote communication protocol from the at least one air conditioner system (1 to N);
a network entity configured to classify the received setting information data for back-up for each air conditioner group and store the classified data; and
a data transmitting module (300) configured to convert the setting information data for back-up stored in the network entity into setting information data for restoration based on the remote communication protocol for transmission.

6. An integrated management system (CS) for controlling multi-type air conditioners, the integrated management system (CS) comprising:
at least one air conditioner system (1 to N) including at least one air conditioner group provided with a local controller connected to multi-type air conditioners of the at least one air conditioner group via a gateway,
**characterized in that**:
the system (1 to N) comprises:
a backup/restoring module (100) configured to monitor changes in setting information related to the at least one air conditioner group, convert the setting information based on the monitored changes into setting information data for back-up according to a remote communication protocol so as to transmit the setting information data, and restore the setting information related to the local controller into the latest setting information when an error occurs in the setting information; and
the integrated management system (CS) further comprises:
a remote integrated management system (CS) configured to receive and store the setting information data for back-up based on the remote communication protocol from the at least one air conditioner system (1 to N), and convert and transmit the latest setting information data for back-up according to the remote communication protocol when a restoration is requested.

7. The integrated management system (CS) of claim 6, wherein when the setting information is changed, the backup/restoring module (100) converts the changed setting information into the setting information data for back-up according to the remote communication protocol for transmission.

8. The integrated management system (CS) of claim 7, wherein the backup/restoring module (100) transmits a request signal for restoring setting information when an error occurs in the setting information, and restores the setting information related to the local controller into the setting information data for back-up as a response signal with respect to the request signal.

9. The integrated management system (CS) of claim 6, wherein the remote integrated management system (CS) comprises:
a data-for-backup collecting module (200) configured to receive the setting information data for back-up based on the remote communication protocol from the at least one air conditioner system (1 to N);
a database server (DS) configured to classify the received setting information data for back-up for each air conditioner group and store the classified data; and
a remote data-for-restoration transmitting module (300) configured to convert the setting information data for back-up stored in the database server (DS) into setting information data for a restoration based on the remote communication protocol for transmission.

10. The integrated management system (CS) of any of claims 1 to 9, further comprising:
a data collecting unit to communicate with at least one multiple air conditioning system in order to collect data related to any changes or updates in operation setting information;
a data transmitting unit (300) to communicate with the at least one multiple air conditioning system in order to transmit data related to data back-up or data restoration; and
a storage medium connected with the data collecting unit and the data transmitting unit (300),
wherein the changed or updated operation setting information is stored in the storage medium to be used for data back-up or data restoration.

11. An integrated management method for controlling multi-type air conditioners connected to a local controller via a gateway,
**characterized in that** the method comprises:
monitoring setting information related to a local controller;
transmitting the setting information when any change is found in the monitored setting information;
receiving the transmitted setting information and storing the setting information as setting information for back-up
requesting a restoration of the setting information when an error occurs in the monitored setting information;
detecting most recently stored setting information according to the restoration request, and transmitting the detected setting information as setting information for restoration; and
receiving the restoration setting information, and restoring the setting information for the local controller into the received setting information for restoration.

## Patentansprüche

1. Integriertes Verwaltungssystem (CS) zum Steuern von Multityp-Klimaanlagen, das aufweist:
wenigstens ein Klimaanlagensystem (1 bis N), das wenigstens eine Klimaanlagengruppe umfasst, die mit einer lokalen Steuerung versehen ist, die über ein Gateway mit Mehrstations-Klimaanlagen der wenigstens einen Klimaanlagengruppe verbunden ist, **dadurch gekennzeichnet, dass** das System aufweist:
ein Backup-/Wiederherstellungsmodul (100), das konfiguriert ist, um Änderungen in Einstellungsinformationen in Bezug auf die wenigstens eine Klimaanlagengruppe zu überwachen, die auf den überwachten Änderungen basierenden Einstellungsinformationen gemäß einem Fernkommunikationsprotokoll in Einstellungsinformationsdaten umzuwandeln, um die Einstellungsinformationsdaten zu übertragen, und die auf die lokale Steuerung bezogenen Einstellungsinformationen in die letzten Einstellungsinformationen wiederherzustellen, wenn ein Fehler in den Einstellungsinformationen auftritt.

2. System nach Anspruch 1, wobei das Backup-/Wiederherstellungsmodul (100), wenn sich die Einstellungsinformationen geändert haben, die geänderten Einstellungsinformationen gemäß dem Fernkommunikationsprotokoll für die Übertragung in Einstellungsinformationsdaten für den Backup umwandelt.

3. System nach Anspruch 2, das ferner aufweist:
ein Fernübertragungsmodul (300) für die Daten-Wiederherstellung,
wobei das Backup-/Wiederherstellungsmodul (100) ein Anforderungssignal an das Fernübertragungsmodul (300) für die Daten-Wiederherstellung überträgt, um die Einstellungsinformationen wiederherzustellen, wenn der Fehler in den Einstellungsinformationen auftritt, und die auf die lokale Steuerung bezogenen Einstellungsinformationen in Einstellungsinformationen umwandelt, die von dem Fernübertragungsmodul (300) für die Daten-Wiederherstellung für den Backup als ein Antwortsignal in Bezug auf das Anforderungssignal empfangen werden.

4. System zum Steuern von Multityp-Klimaanlagen, wobei das System aufweist:
ein integriertes Fernverwaltungssystem (CS), das konfiguriert ist, um Einstellungsinformationsdaten von wenigstens einem Klimaanlagensystem (1 bis N) basierend auf einem Fernkommunikationsprotokoll zu empfangen und die Einstellungsinformationsdaten für den Backup zu speichern, und die letzten Einstellungsinformationsdaten für den Backup gemäß dem Fernkommunikationsprotokoll umzuwandeln und zu übertragen, wenn eine Wiederherstellung angefordert wird.

5. System nach Anspruch 4, wobei das integrierte Fernverwaltungssystem (CS) aufweist:
ein Datensammelmodul (200), das konfiguriert ist, um die Einstellungsinformationsdaten für den Backup basierend auf einem Fernkommunikationsprotokoll von dem wenigstens einen Klimaanlagensystem (1 bis N) zu empfangen;
eine Netzwerkeinheit, die konfiguriert ist, um die empfangenen Einstellungsinformationsdaten für den Backup für jede Klimaanlagengruppe zu klassifizieren und die klassifizierten Daten zu speichern; und
ein Datenübertragungsmodul (300), das konfiguriert ist, um die Einstellungsinformationsdaten für den Backup, die in der Netzwerkeinheit gespeichert sind, basierend auf dem Fernkommunikationsprotokoll für die Übertragung in Einstellungsinformationsdaten für die Wiederherstellung umzuwandeln.

6. Integriertes Verwaltungssystem (CS) zum Steuern von Mehrstations-Klimaanlagen, wobei das integrierte Verwaltungssystem (CS) aufweist:
wenigstens ein Klimaanlagensystem (1 bis N), das wenigstens eine Klimaanlagengruppe umfasst, die mit einer lokalen Steuerung versehen ist, die über ein Gateway mit Multityp-Klimaanlagen der wenigstens einen Klimaanlagengruppe verbunden ist,
**dadurch gekennzeichnet, dass**:
das System (1 bis N) aufweist:
ein Backup-/Wiederherstellungsmodul (100), das konfiguriert ist, um Änderungen in Einstellungsinformationen in Bezug auf die wenigstens eine Klimaanlagengruppe zu überwachen, die auf den überwachten Änderungen basierenden Einstellungsinformationen gemäß einem Fernkommunikationsprotokoll in Einstellungsinformationsdaten für den Backup umzuwandeln, um die Einstellungsinformationsdaten zu übertragen, und die auf die lokale Steuerung bezogenen Einstellungsinformationen in die letzten Einstellungsinformationen wiederherzustellen, wenn ein Fehler in den Einstellungsinformationen auftritt; und
das integrierte Verwaltungssystem (CS) ferner aufweist:
ein integriertes Fernverwaltungssystem (CS), das konfiguriert ist, um die Einstellungsinformationsdaten für den Backup basierend auf dem Fernkommunikationsprotokoll von dem wenigstens einen Klimaanlagensystem (1 bis N) zu empfangen und zu speichern, und die letzten Einstellungsinformationsdaten für den Backup gemäß dem Fernkommunikationsprotokoll umzuwandeln und zu übertragen, wenn eine Wiederherstellung angefordert wird.

7. Integriertes Verwaltungssystem (CS) nach Anspruch 6, wobei das Backup-/Wiederherstellungsmodul (100), wenn sich die Einstellungsinformationen geändert haben, die geänderten Einstellungsinformation gemäß dem Fernkommunikationsprotokoll für die Übertragung in die Einstellungsinformationsdaten für den Backup umwandelt.

8. Integriertes Verwaltungssystem (CS) nach Anspruch 7, wobei das Backup-/Wiederherstellungsmodul (100) ein Anforderungssignal für Wiederherstellungseinstellungsinformationen überträgt, wenn ein Fehler in den Einstellungsinformationen auftritt, und die auf die lokale Steuerung bezogenen Einstellungsinformationen als ein Antwortsignal in Bezug auf das Anforderungssignal in die Einstellungsinformationsdaten für den Backup umwandelt.

9. Integriertes Verwaltungssystem (CS) nach Anspruch 6, wobei das integrierte Fernmanagementsystem (CS) aufweist:
ein Datensammelmodul (200) für den Backup, das konfiguriert ist, um die Einstellungsinformationsdaten für den Backup basierend auf dem Fernkommunikationsprotokoll von dem wenigstens einen Klimaanlagensystem (1 bis N) zu empfangen;
einen Datenbankserver (DS), der konfiguriert ist, um die empfangenen Einstellungsinformationsdaten für den Backup für jede Klimaanlagengruppe zu klassifizieren und die klassifizierten Daten zu speichern; und
ein Fernübertragungsmodul (300) für die Daten-Wiederherstellung, das konfiguriert ist, um die Einstellungsinformationsdaten für den Backup, die in dem Datenbankserver (DS) gespeichert sind, basierend auf dem Fernkommunikationsprotokoll für die Übertragung in Einstellungsinformationsdaten für eine Wiederherstellung umzuwandeln.

10. Integriertes Verwaltungssystem (CS) nach einem der Ansprüche 1 bis 9, das ferner aufweist:
eine Datensammeleinheit zum Kommunizieren mit wenigstens einem Multityp-Klimaanlagensystem, um Daten in Bezug auf jegliche Änderungen oder Aktualisierungen in Betriebseinstellungsinformationen zu sammeln;
eine Datenübertragungseinheit (300), um mit dem wenigstens einen Mehrstations-Klimaanlagensystem zu kommunizieren, um Daten in Bezug auf den Datenbackup oder die Datenwiederherstellung zu übertragen; und
ein Speichermedium, das mit der Datensammeleinheit und der Datenübertragungseinheit (300) verbunden ist,
wobei die geänderten oder aktualisierten Betriebseinstellungsinformationen in dem Speichermedium gespeichert sind, um für den Datenbackup oder die DatenWiederherstellung verwendet zu werden.

11. Integriertes Verwaltungsverfahren zum Steuern von Mehrstations-Klimaanlagen, die über ein Gateway mit einer lokalen Steuerung verbunden sind,
**dadurch gekennzeichnet, dass** das Verfahren aufweist:
Überwachen von auf eine lokale Steuerung bezogenen Einstellungsinformationen;
Übertragen der Einstellungsinformationen, wenn irgendeine Änderung in den überwachten Einstellungsinformationen gefunden wird;
Empfangen der übertragenen Einstellungsinformationen und Speichern der Einstellungsinformationen als Einstellungsinformationen für den Backup;
Anfordern einer Wiederherstellung der Einstellungsinformationen, wenn in den überwachten Einstellungsinformationen ein Fehler auftritt;
Erfassen zuletzt gespeicherter Einstellungsinformationen gemäß der Wiederherstellungsanforderung und Übertragen der erfassten Einstellungsinformationen als Einstellungsinformationen für die Wiederherstellung; und
Empfangen der Wiederherstellungseinstellungsinformationen und Wiederherstellen der Einstellungsinformationen für die lokale Steuerung auf die empfangenen Einstellungsinformationen für die Wiederherstellung.

## Revendications

1. Système de gestion intégrée (CS) pour commander des climatiseurs multi-types, comprenant :
au moins un système de climatiseurs (1 à N) comprenant au moins un groupe de climatiseurs muni d'un contrôleur local connecté à des climatiseurs multi-types de l'au moins un groupe de climatiseurs via une passerelle, **caractérisé en ce que** le système comprend :
un module de sauvegarde/restauration (100) configuré pour surveiller des changements dans des informations de réglage relatives à l'au moins un groupe de climatiseurs, convertir les informations de réglage sur la base des changements surveillés en données d'informations de réglage selon un protocole de communication à distance de manière à transmettre les données d'informations de réglage, et restaurer les informations de réglage relatives au contrôleur local dans les informations de réglage les plus récentes quand une erreur se produit dans les informations de réglage.

2. Système selon la revendication 1, dans lequel, quand les informations de réglage sont changées, le module de sauvegarde/restauration (100) convertit les informations de réglage changées en des données d'informations de réglage pour la sauvegarde selon le protocole de communication à distance pour la transmission.

3. Système selon la revendication 2, comprenant en outre :
un module de transmission de données pour la restauration à distance (300),
dans lequel le module de sauvegarde/restauration (100) transmet un signal de demande au module de transmission de données pour la restauration à distance (300) pour restaurer les informations de réglage quand l'erreur se produit dans les informations de réglage, et restaure les informations de réglage relatives au contrôleur local en des informations de réglage reçues à partir du module de transmission de données pour la restauration à distance (300) pour la sauvegarde comme un signal de réponse par rapport au signal de demande.

4. Système pour commander des climatiseurs multi-types, le système comprenant :
un système de gestion intégrée à distance (CS) configuré pour recevoir des données d'informations de réglage à partir d'au moins un système de climatiseurs (1 à N) et
pour stocker les données d'informations de réglage pour la sauvegarde, sur la base d'un protocole de communication à distance, et pour convertir et transmettre les données d'informations de réglage les plus récentes pour la sauvegarde selon le protocole de communication à distance quand une restauration est demandée.

5. Système selon la revendication 4, dans lequel le système de gestion intégrée à distance (CS) comprend :
un module de collecte de données (200) configuré pour recevoir les données d'informations de réglage pour la sauvegarde sur la base du protocole de communication à distance à partir de l'au moins un système de climatiseurs (1 à N) ;
une entité de réseau configurée pour classer les données d'informations de réglage reçues pour la sauvegarde pour chaque groupe de climatiseurs et stocker les données classées ; et
un module de transmission de données (300) configuré pour convertir les données d'informations de réglage pour la sauvegarde stockées dans l'entité de réseau en des données d'informations de réglage pour la restauration sur la base du protocole de communication à distance pour la transmission.

6. Système de gestion intégrée (CS) pour commander des climatiseurs multi-types, le système de gestion intégrée (CS) comprenant :
au moins un système de climatiseurs (1 à N) comprenant au moins un groupe de climatiseurs muni d'un contrôleur local connecté à des climatiseurs multi-types de l'au moins un groupe de climatiseurs via une passerelle,
**caractérisé en ce que**
le système (1 à N) comprend :
un module de sauvegarde/restauration (100) configuré pour surveiller des changements dans des informations de réglage relatives à l'au moins un groupe de climatiseurs, convertir les informations de réglage sur la base des changements surveillés en données d'informations de réglage pour la sauvegarde selon un protocole de communication à distance de manière à transmettre les données d'informations de réglage, et restaurer les informations de réglage relatives au contrôleur local dans les informations de réglage les plus récentes quand une erreur se produit dans les informations de réglage ; et
le système de gestion intégrée (CS) comprend en outre :
un système de gestion intégrée à distance (CS) configuré pour recevoir et stocker les données d'informations de réglage pour la sauvegarde sur la base du protocole de communication à distance à partir de l'au moins un système de climatiseurs (1 à N),
et pour convertir et transmettre les données d'informations de réglage les plus récentes pour la sauvegarde selon le protocole de communication à distance quand une restauration est demandée.

7. Système de gestion intégrée (CS) selon la revendication 6, dans lequel, quand les informations de réglage sont changées, le module de sauvegarde/restauration (100) convertit les informations de réglage changées dans les données d'informations de réglage pour la sauvegarde selon le protocole de communication à distance pour la transmission.

8. Système de gestion intégrée (CS) selon la revendication 7, dans lequel le module de sauvegarde/restauration (100) transmet un signal de demande pour restaurer les informations de réglage quand une erreur se produit dans les informations de réglage, et restaure les informations de réglage relatives au contrôleur local dans les données informations de réglage pour la sauvegarde comme un signal de réponse par rapport au signal de demande.

9. Système de gestion intégrée (CS) selon la revendication 6, dans lequel le système de gestion intégrée à distance (CS) comprend :
un module de collecte de données pour la sauvegarde (200) configuré pour recevoir les données informations de réglage pour la sauvegarde sur la base du protocole de communication à distance à partir de l'au moins un système de climatiseurs (1 à N) ;
un serveur de base de données (DS) configuré pour classer les données d'informations de réglage reçues pour la sauvegarde pour chaque groupe de climatiseurs et stocker les données classées ; et
un module de transmission de données pour la restauration à distance (300) configuré pour convertir les données d'informations de réglage pour la sauvegarde stockées dans le serveur de base de données (DS) en des données informations de réglage pour une restauration sur la base du protocole de communication à distance pour la transmission.

10. Système de gestion intégrée (CS) selon l'une quelconque des revendications 1 à 9, comprenant en outre :
une unité de collecte de données pour communiquer avec au moins un système de climatisation multiple de manière à collecter des données relatives à n'importe quels changements ou mises à jour dans des informations de réglage de fonctionnement ;
une unité de transmission de données (300) pour communiquer avec l'au moins un système de climatisation multiple de manière à transmettre des données relatives à la sauvegarde de données ou la restauration de données ; et
un support de stockage connecté à l'unité de collecte de données et à l'unité de transmission de données (300),
dans lequel les informations de réglage de fonctionnement changées ou mises à jour sont stockées dans le support de stockage pour être utilisées pour la sauvegarde de données ou la restauration de données.

11. Procédé de gestion intégrée pour commander des climatiseurs multi-types connectés à un contrôleur local via une passerelle,
**caractérisé en ce que** le procédé comprend :
la surveillance d'informations de réglage relatives à un contrôleur local ;
la transmission des informations de réglage quand un quelconque changement est relevé dans les informations de réglage surveillées ;
la réception des informations de réglage transmises et le stockage des informations de réglage comme des informations de réglage pour la sauvegarde ;
la demande d'une restauration des informations de réglage quand une erreur se produit dans les informations de réglage surveillées ;
la détection des informations de réglage stockées le plus récemment en fonction de la demande de restauration et la transmission des informations de réglage détectées comme des informations de réglage pour la restauration ; et
la réception des informations de réglage de restauration et la restauration des informations de réglage pour le contrôleur local dans les informations reçues de réglage pour la restauration.
